# EUROPEAN PATENT SPECIFICATION

(11) **EP 3 021 677 B1**
(45) Date of publication and mention of the grant of the patent: **30.05.2018**
(21) Application number: 13763114.9
(22) Date of filing: 17.07.2013
(51) Int. Cl.: A23C 9/12, A23C 9/142, A23C 19/032, A23C 19/076

(54) **PROCESS FOR PREPARING A FERMENTED DAIRY PRODUCT WITH REDUCED AMOUNT OF LACTOSE AND IMPROVED NUTRITIONAL AND ORGANOLEPTIC PROPERTIES**
VERFAHREN ZUR HERSTELLUNG EINES FERMENTIERTEN MILCHPRODUKTES MIT REDUZIERTEM LACTOSEGEHALT SOWIE VERBESSERTEN NÄHRSTOFF- UND ORGANOLEPTISCHEN EIGENSCHAFTEN
PROCÉDÉ DE PRÉPARATION D'UN PRODUIT LAITIER FERMENTÉ À TENEUR RÉDUITE EN LACTOSE ET À PROPRIÉTÉS NUTRITIONNELLES ET ORGANOLEPTIQUES AMÉLIORÉES

(43) Date of publication of application: 25.05.2016
(73) Proprietor: Compagnie Gervais Danone, 75009 Paris (FR)
(72) Inventor: RAMAGE, Olivier, F-91360 Villemoisson Sur Orge (FR); LYOTHIER, Arnaud, F-92700 Colombes (FR); GAREM, Anita, F-28350 Dampierre Sur Avre (FR); DA SILVA, Gislene, 06200 Nice (FR)
(74) Representative: Cabinet Plasseraud
(86) International application number: PCT/IB2013/001645
(87) International publication number: WO 2015/008103

(56) References cited:
- EP-A1- 1 364 582
- WO-A1-03/094623
- DE-U1-202011 051 733
- US-A1- 2004 040 448
- US-A1- 2009 092 731
- SCHKODA P: "Das neue FML-Frischkäseverfahren", DEUTSCHE MILCHWIRTSCHAFT, HILDESHEIM, DE, vol. 48, no. 2, 1 January 1997 (1997-01-01), pages 36-41, XP002101132, ISSN: 0012-0480

## Description

The invention relates to a process for preparing a fermented dairy product, comprising the following steps:
a) hydrolysis of lactose contained in milk;
b) proteins and sugars concentrations through a process of filtration of the resulting composition under high pressure;
wherein a step c) of fermentation of milk is performed during step a) or after step a) or after step b).
The invention also relates to a product obtainable according to the process of the invention.

Fermented dairy products are a good source of proteins and calcium, with a balanced fat and carbohydrate content. However some people do not tolerate milk-based yogurts, for example because of lactose intolerance. Thus, there is a need for dairy products with a reduced amount of lactose, and that still present the advantages of yogurts, especially a good nutrition source.

In addition, the consumer of fermented dairy products is usually looking for a product with pleasant sensorial properties, such as a sweet taste. However, some of the consumers are now very diligent in the matter of the sugar content of a product. The life style of those consumers may generally include a constant care of the quantity of absorbed sugars. For meeting those consumers' needs and requests, fermented dairy product complemented with artificial sweeteners were developed. However, such products failed to satisfy a category of consumers who are not willing to consume such artificial sweeteners. There is thus still also an unfulfilled need for a dairy product with reduced amount of sugars with an improved sweet taste, without added sugars or artificial sweeteners.

In addition, there is an unfulfilled need for a fermented dairy product with improved organoleptic properties, a satisfying sweet taste, and improved nutritional properties such as an improved content of proteins and calcium, while having decreased contents of lactose and sodium.
The invention addresses at least one of the needs and/or problems mentioned above by providing a process for preparing a fermented dairy product, comprising the hydrolysis of lactose comprised in the milk, followed by proteins and sugars concentrations through a process of filtration under high pressure, which process is nanofiltration or reverse osmosis.
To date, at the best knowledge of the inventors, there is no application of nanofiltration or reverse osmosis technologies to the production of acceptable dairy products. The reason is that the nanofiltration membranes and reverse osmosis retain lactose, and therefore do not allow draining of the cheese proteins lean dough and provide a nutritionally unacceptable product.

US20040040448 shows a process involving both nanofiltration and reverse osmosis, in which some pressure levels as used herein are generally envisaged, but not exemplified in working examples. The inventors thus overcame a technical prejudice by developing a process for preparing a fermented dairy product, in which nanofiltration or reverse osmosis is performed. They further managed to optimize the process by performing the concentration step in a specific pressure range outside of the conventionally used pressure ranges.
The invention thus relates to a process for preparing a fermented dairy product, comprising the following steps:
a) hydrolysis of lactose contained in milk;
b) proteins and sugars concentrations through a process of filtration by nanofiltration or reverse osmosis of the resulting composition under high pressure;
wherein a step c) of fermentation of milk is performed simultaneously at the step a) or after step a) or after step b).

The fermented dairy product of the invention is selected in the group consisting of a yogurt, a cream cheese, and a cheese. More preferably, said fermented dairy product is a cream cheese or a yoghurt, preferably a Greek yoghurt.
The process of the invention also comprises a step a) of hydrolysis of lactose contained in milk.
Herein milk typically refers to animal milk, for example cow milk. Some alternative animal milks can be used, such as sheep milk or goat milk. The milk of the fermented dairy product can be for example whole milk, partially or totally skimmed milk, skimmed milk powder etc. The milk of the fermented dairy product can be introduced completely in a liquid form or partly in a milk powder form, mixed with water or with liquid milk.

In one embodiment, step a) and step c) of the process occur simultaneously.
In another embodiment, step c) of fermentation occurs after the step a) or after the step b) of concentration.
Said step a) is performed by any known lactase. Typically, said lactase is in powder form.
Preferably, said lactase is selected in the group consisting of Maxilact LG 2000 and LG 5000. Maxilact LG2000 and LG500 are commercialised by the company DSM.

Said step a) confers valuable features to the fermented dairy product obtained by the process of the invention.

The use of lactase for the hydrolysis of natural sugar found in milk has been widely used for the manufacture of milk products in order to reduce the amount of lactose, a sugar known to cause digestibility problems of milk, especially in subject suffering from lactose intolerance. Therefore, by decreasing the amount of lactose in the fermented dairy product, the process of the invention provides a product which is suitable for subjects suffering from lactose intolerance.

In addition, said step of hydrolysis of lactose also increases the sweetness of the fermented dairy product, while keeping the same amount of sugar. Indeed, it has been shown that products resulting from the hydrolysis of lactose, i.e glucose and galactose, have a sweetening power higher than lactose. Therefore, the product of the invention presents a way higher sweet taste without any added sugars or artificial sweeteners. The inventors have further shown this increase in the sweetness of the fermented dairy product obtained by the process of the invention, thanks to sensory analysis. Indeed, the sweetness of the different types of sugars was determined by comparative sensory analysis with sucrose. The sweetness of these three sugars was then classified as follows:
- lactose: 27% of the sweetness of sucrose;
- glucose: 67% of the sweetness of sucrose;
- galactose: 60% of the sweetness of sucrose.

A lactose molecule has only 27% of sweetness compared to the sweetness s of sucrose.
As for glucose and galactose, which are the products of the hydrolysis of lactose, they generate together a sweetening close to 63.5% the sweetness of sucrose. Thus, the sweetness of the fermented dairy product obtained according to the process of the invention could be increased by 2 to 3 times.
The inventors have shown that the product obtained at the end of step a) comprises much less lactose and more glucose and galactose.
The process of the invention further comprises a step b) of proteins and sugars concentrations through a process of filtration under high pressure.
Typically, step b) occurs after step a).
Prior art discloses methods for concentrating proteins and sugars based on centrifugation. Indeed, in the well known conventional methods for producing cheese, a step of centrifugation of the milk is usually performed. The separations techniques based on centrifugation are thus widely used in the cheese industry for the separation of serum and cream cheese. Centrifugation through separation occurs after the steps of coagulation and/or milk fermentation. It is used to accelerate and control the separation of the milk proteins from the serum. Such a step provides a cheese paste concentrated in proteins (between 8-12% of proteins) and rich in soluble acid whey lactose, minerals and milk proteins/derived soluble nitrogen. Therefore, the techniques based on centrifugation are efficient for concentrating the protein, by about 3 times. The serum resulting from this separation by centrifugation is an intermediate product which comprises about 4% to 5% lactose.

Said serum is conventionally treated as a waste, which is unacceptable for ecological, economic and nutritional reasons.
Hence, the inventors have developed a way to recover said intermediate product, which may confer important nutritional properties to a product meant to be consumed. Indeed, by using a process of filtration under high pressure, the inventors managed to develop fermented dairy products with unexpected and valuable properties such as improved organoleptic properties and improved nutritional properties. In one preferred embodiment, said step b) of the process of the invention is a step b') of nanofiltration. Said step allows the concentrating proteins as well as glucose and galactose, and allows the demineralization of sodium.
More specifically, it allows concentrating proteins (in the retentate) selectively from the soluble phase containing lactose, minerals, non-protein nitrogen (in the permeate). This separation process is purely physical and because it is a gentle process, both fractions (permeate and retentate) can be used.
Typically, the step b') of nanofiltration applies after fermentation (pH 4.5-4.6).
Due to the high viscosity of the cheese paste, the used nanofiltration membranes have a specific configuration of filter press (flat membranes), and the last loop filter that processes the retentate has a positive displacement pump.

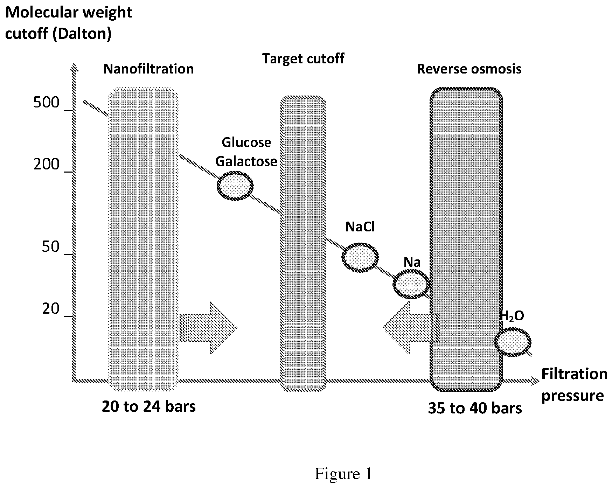

As used herein, the term **"nanofiltration membranes"** refers to membranes with a pore size on the order of nanometers. For example, a nanofiltration membrane can have a pore size below about 100 nm. Nanofiltration membranes are often rated by molecular weight cutoff (i.e. threshold of protein molecular mass which are retained), and can have a molecular weight cut-off of less than 1000 Da.
In the purpose of optimizing the process of the invention, the inventors further modified the nanofiltration conditions that are classically used. Indeed, nanofiltration is conventionally performed at a pressure comprised between 20 to 24 bars. In these generic conditions, the nanofiltration step defines a molecular weight cutoff of 300 to 500 Daltons. The inventors thus put in light the fact that in these pressure conditions, the nanofiltration retains products obtained at the end of step a), i.e. the products obtained by lactose hydrolysis. Indeed, glucose and galactose have a molecular mass of 180 Daltons.
The inventors hence modified the well known methods of nanofiltration by increasing the pressure to a value comprised between 25 and 35 bars, preferably between about 30 bars and about 35 bars, more preferably of about 30 bars. Therefore, in these very specific conditions, the nanofiltration membranes does not allow the passage of glucose and galactose as well as the passage of calcium In addition, in these pressure conditions, the nanofiltration step of the invention allow the passage of sodium. This is depicted in figure 1.

Therefore, step b') is performed at a pressure comprised between 25 and 35 bars, preferably between 30 and 35 bars, more preferably of 30 bars. The product obtained at the end of step b') maintains its highly valuable properties, i.e. an improved content of proteins, an improved content of calcium, a decreased content of lactose, the absence of sodium, and a sweeter taste thanks to the presence of galactose and glucose.

The invention thus overcomes a technical prejudice, since the skilled person was discouraged to perform a nanofiltration step when developing a fermented dairy product, especially a cream cheese or a yoghurt. Indeed, using nanofiltration in the conventional acknowledged conditions of pressure would be improper since it is known that such step would not allow the draining of the proteins of cheese paste.

Preferably, said step b') is performed at a temperature of 40°C. Typically, the membranes used for carrying out this step b') are membranes such as the membranes DK Sanitary Series. Said membranes are commercialized by GE Water & Process Technology. Typically, step b') is performed thanks to a single loop and 2 membranes put in a parallel.

Alternatively, said step b) of the process of the invention is a step b") of reverse osmosis.
As used herein, the term "reverse osmosis" refers to a process by which particular molecules and ions are removed from solution by applying pressure to said solution on one side of a selective membrane. That is, the solute is retained on the pressurized side of the membrane and the solvent is allowed to pass to the other side. The membrane used in reverse osmosis refers to a functional filtering unit, and may include one or more semi-permeable layers and one or more support layers. Depending on the membrane employed, reverse osmosis can remove particles varying in size from the macro-molecular to the microscopic, and modern reverse osmosis units are capable of removing particles, bacteria, spores, viruses and even ions.

In the purpose of optimizing the process of the invention, the inventors further modified the reverse osmosis conditions that are classically used. Indeed, reverse osmosis is conventionally performed at a pressure comprised between 35 and 40 bars. In these generic conditions, the ultrafiltration step defines a molecular weight cutoff (i.e. threshold of protein mass which are retained) of 20 to 50 Daltons, which is thus highly restrictive. The inventors put in light the fact that in these pressure conditions, the reverse osmosis retains almost all the constituents of the fermented product, especially products meant to be eliminated, such as sodium. The presence of sodium in the final dairy fermented product is not acceptable for the consumer since it confers a salty taste. Therefore, a step of reverse osmosis in the conventional pressure condition is improper for developing a fermented dairy product since it provides a product with unacceptable sensorial properties.
The inventors hence modified the well known methods of reverse osmosis by decreasing the pressure to a value comprised between 15 to 34 bars, preferably between 18 bars and 30 bars, more preferably between 24 bars and 30 bars, even more preferably 30 bars. Therefore, in these very specific conditions, the reverse osmosis does allow the passage of sodium ions while still concentrating the proteins, glucose, galactose and calcium. This is well depicted in figure 1.

Therefore, step b") is performed at a pressure comprised between 15 to 34 bars preferably between 18 bars and 30 bars, more preferably between 24 bars and 30 bars, even more preferably 30 bars. The product obtained in this specific embodiment maintains its highly valuable properties, i.e. an improved content of proteins, an improved content of calcium, a decreased content of lactose, the absence of sodium, and a sweeter taste thanks to the presence of galactose and glucose.
The invention overcomes a technical prejudice, since the skilled person was discouraged to perform a reverse osmosis step when developing a fermented dairy product, especially a cream cheese or a yoghurt. Indeed, reverse osmosis is considered improper since it does not allow the draining of the proteins of cheese paste.
Preferably, said step b") is performed at a temperature of 40°C. Typically, the membrane used for carrying out this step b") is a membrane such as the membranes AF Series. Said membranes are commercialized by GE Water & Process Technology.

Typically, the reverse osmosis is performed thanks to a single loop and 2 membranes put in a parallel.

Therefore, by using a process of filtration under high pressure, particularly in a specific pressure range, the inventors managed to optimize the process of the invention to develop fermented dairy products with improved organoleptic properties and improved nutritional properties due to, *inter alia* :
- an improved content of proteins;
- an improved content of calcium;
- a decreased content of lactose;
- the absence of sodium; and
- a sweeter taste thanks to the presence of galactose and glucose.

The process of the invention comprises a step c) of fermentation of milk.
In one embodiment, said step c) provides a fermented milk, also referred to as "white mass".
In another embodiment, said step c) includes the addition of an enzymatic preparation comprising rennin (also called chymosin), preferably the addition of rennet. Rennet is an enzymatic preparation comprising rennin, pepsin and lipase. Typically,"rennet" refers to an enzyme preparation which is capable of forming a cheese curd in milk by cleaving the phenylalanine/methionine linkage in casein type proteins. The term rennet thus includes proteins such as rennin (also called chymosin) and its precursors such as prorennin, which is activated to rennin by treating the precursor prorennin at low pH.
In this particular embodiment, step c) provides a cheese curd.

Fermentation is typically performed by adding lactic acid bacteria to milk and produces lactic acid that lowers the pH and causes the milk proteins to precipitate and set. Fermented products typically comprise microorganisms, such as lactic acid bacteria and/or probiotics (the probiotics can be lactic acid bacteria), dead or alive. These are also referred to as ferments or cultures or starters. Lactic acid bacteria are known by the one skilled in the art. Probiotics are also known by the one skilled in the art. Examples of probiotics include some *Bifidobacteria* and *Lactobacilli,* such as *Bifidobacterium brevis, Lactobacillus acidophilus, Bifidobacterium animalis, Bifidobacterium animalis lactis, Bifidobacterium infantis, Bifidobacterium longum, Lactobacillus casei, Lactobacillus casei paracasei, Lactobacillus reuteri, Lactobacillus plantarum, or Lactobacillus rhamnosus.*
Typically, the fermented dairy product of the invention comprises lactic acid bacteria. Typically, step c) comprises the addition of lactic acid bacteria. The lactic acid bacteria typically comprise a mixture of *Streptococcus thermophilus* and *Lactobacillus delbrueckii subsp. Bulgaricus.*

The one skilled in the art knows how to perform such a fermentation step. Preferably, step c) consists of fermentation of milk with a lactic acid bacteria and rennet, preferably during a period comprised between 15 h and 20 h, preferably at a temperature comprised between 15° to 30°C, and more preferably at a temperature of about 28°C. In such a case, when the curd has reached a pH comprised between 4.4 to 4.6, preferably a pH of 4.4, the fermentation is stopped by a step of heat treatment at a temperature of about 58°C during 2 minutes. The preparation is then cooled at a temperature of about 40°C.
The obtained cheese curd comprises a protein content of 3 to 4%. It is then centrifuged to obtain a cheese paste with a protein content comprised between 8 to 12%. Thus, when step c) is performed with lactic acid bacteria and rennet, a cheese curd is obtained at the end of said step c).

Thus, specifically and preferably, the process of the invention involves 3 alternatives.

The first alternative is a process for preparing a fermented dairy product, comprising the following steps:
a) hydrolysis of lactose contained in milk;
b) nanofiltration of the resulting composition, at a pressure comprised between 25 bars and 35 bars, preferably between 30 bars and 35 bars, more preferably of 30 bars,
wherein a step c) of fermentation of milk is performed during step a).
The second alternative is a process for preparing a fermented dairy product, comprising the following steps:
a) hydrolysis of lactose contained in milk;
b) reverse osmosis of the resulting composition, at a pressure comprised between 15 to 34 bars preferably between 18 bars and 30 bars, more preferably between 24 bars and 30 bars , even more preferably 30 bars,
wherein a step c) of fermentation of milk is performed after step a).
The third alternative is a process for preparing a fermented dairy product, comprising the following steps:
a) hydrolysis of lactose contained in milk;
b) reverse osmosis of the resulting composition, at a pressure comprised between 15 to 34 bars preferably between 18 bars and 30 bars, more preferably between 24 bars and 30 bars, even more preferably 30 bars,
wherein a step c) of fermentation of milk is performed after step b).
The present invention also relates to a fermented dairy product obtainable according to the process of the invention.
All the previously mentioned technical features are applicable to the fermented dairy product of the invention.
Preferably, said fermented dairy product according to the invention is substantially exempt, preferably exempt, of any added sugars or artificial sweeteners.

As used herein, the expression "substantially exempt of any added sugars or artificial sweeteners" refers to a fermented dairy product comprising less than 0.5%, preferably less than 0,3 %, preferably less than 0,1% in weight of any added sugars or artificial sweeteners.
As used herein, the expression "exempt of any added sugars or artificial sweetener" refers to a fermented dairy product which does not comprise any added sugars or artificial sweeteners.

### Figures

**Figure 1****: molecular weight cutoff**
This figure shows the molecular weight cutoff provided by nanofiltration and reverse osmosis when used in the conventional pressure ranges.
Indeed, nanofiltration is conventionally performed at a pressure comprised between 20 to 24 bars, which defines a molecular weight cutoff of 300 to 500 Daltons.
In these pressure conditions, the nanofiltration allows the passage of glucose and galactose, which have a molecular mass of 180 Daltons. When the pressure is increased to a pressure range between 30 to 35 bars, the nanofiltration membranes retains glucose and galactose.

As for reverse osmosis, it is performed at a pressure comprised between 35 to 40 bars, which defines a molecular weight cutoff of 20 to 50 Daltons. In these pressure conditions, reverse osmosis retains almost all the constituents of the fermented product, especially products meant to be eliminated, such as sodium.
When the pressure is decreased to a value comprised between about 24 bars and about 30 bars, the reverse osmosis does allow the passage of sodium ions while still concentrating the proteins, glucose, galactose and calcium.

### EXAMPLES

The inventors developed fermented dairy products according to the process of the invention.

### 1. Preparation of the cheese curd and enzymatic hydrolysis

The cheese curd was obtained by fermentation of pasteurized milk (skimmed or not) with a lactic acid bacteria and chymosin. This fermentation lasted between 15 h and 20 h at a temperature of 28°C (step c).

A lactase was added during the fermentation step (step a). When the curd reached a pH of 4.4, the fermentation was stopped by a step of heat treatment at a temperature of 58°C during 2 minutes. The resulting product was then cooled at a temperature of 40°C.
The cheese curd comprised a protein content of 3 to 4%. A centrifugation step was then performed to obtain a cheese paste comprising a protein content of 8 to 12% .

The inventors also performed the same experiment without adding lactase in order to obtain comparative results.

The results are detailed in table 1.

**Table 1: Influence of the hydrolysis of lactase in the composition of the fermented dairy product of the invention and comparative results**

| | PROTEIN | LACTOSE | GLUCOSE | GALACTOSE | NA | CA | K | PHOSPHATE |
|---|---|---|---|---|---|---|---|---|
| Skim milk (before fermentation) | 3,3 | 5 | < 0,2 | < 0,2 | 40 | 120 | 140 | 200 |
| Cheesee curd without Lactase (comparative) | 3,3 | **4,5** | **< 0,2** | **< 0,2** | 40 | 120 | 140 | 200 |
| Cheese curd With lactase (invention) | 3,2 | **< 0,2** | **1,1** | **1,9** | 42 | 126 | 140 | 208 |

Table 1 shows that the step of hydrolysis of lactose (step a) dramatically decreases the content of lactose, while increasing the content of galactose and glucose.

### 2. Proteins and sugars concentrations

The inventors carried out the two embodiments of the invention, i.e. through nanofiltration (step b')) and reverse osmosis (step b")).
These techniques are conventionally characterized by a molecular weight cutoff as follows:
- Nanofiltration: molecular weight cut off of 300-500 Daltons; and
- Reverse osmosis: molecular weight cut off of 20-50 Daltons.

The inventors adapted these two techniques for providing the original product of the invention. For this purpose, they modified the conditions of pressure for both of nanofiltration and reverse osmosis. This is depicted in figure 1.

### a) Nanofiltration (step b'))

Nanofiltration, which is conventionally performed at a pressure range comprised between 20 to 24 bars, preferably at a pressure of 20 bars does not allow the passage of glucose and galactose which have a molecular mass of 180 Daltons.

The inventors thus modified the well known methods of nanofiltration by increasing the pressure to a pressure of about 30 bars. In such conditions, the nanofiltration does not allow the passage of glucose and galactose as well as the passage of calcium. In addition, the nanofiltration step of the invention allows the passage of sodium, as shown in figure 1.

The inventors performed the nanofiltration at a temperature of 40°C, through the membranes DK Sanitary Series, commercialized by GE Water & Process Technology.

### b) Reverse osmosis (step b"))

As shown in figure 1, reverse osmosis is conventionally performed at a pressure range comprised between 35 to 40 bars. In such conditions, reverse osmosis retains almost all the constituents of the fermented product, especially constituents meant to be eliminated, such as sodium.

The inventors hence modified the well known methods of reverse osmosis by decreasing the pressure to a pressure comprised about 24 to about 30 bars. In such conditions, reverse osmosis does allow the passage of sodium ions while still concentrating the proteins, glucose, galactose and calcium, as shown in figure 1.

The inventors performed the reverse osmosis at a temperature of 40°C, through the membranes AF Series, commercialized by GE Water & Process Technology.

### 3. Characterisation of the obtained product.

The inventors developed several fermented dairy products according to the following experiments :
A) using a step of centrifugation, as commonly used in prior art;
B) using a nanofiltration step at a pressure of 24 bars;
C) using a nanofiltration step at a pressure of 35 bars;
D) using a reverse osmosis step at a pressure of 18 bars; and
E) using a reverse osmosis step at a pressure of 24 bars.

The results are summarised in table 2.

**Table 2: Influence of the concentration step on the composition of fermented dairy product and comparatives results**

| | PROTEIN | LACTOSE | GLUCOSE | GALACTOSE | NA | CA | K |
|---|---|---|---|---|---|---|---|
| Experiment A Via centrifugation (prior art) | 8,5 à 10,5 | 3,8 | < 0,2 | < 0,2 | 35 | 115 | - |
| Experiment B Via Nanofiltration 24 Bars | 6,1 | < 0,2 | 1,7 | 3,1 | 39 | 240 | 127 |
| Experiment C Via Nanofiltration 35 Bars | 8,5 | < 0,2 | 2,2 | 4 | 39 | 274 | 131 |
| Experiment D Via reverse osmosis 18Bars | 6,2 | < 0,2 | 2,5 | 3,8 | 60 | 260 | 218 |
| Experiment E Via Reverse osmosis 24Bars | 7,36 | < 0,2 | 3 | 4,5 | 56 | 285 | 200 |

The inventors have thus developed a process providing a fermented dairy product with improved organoleptic, nutritional and sensorial properties.

## Claims

1. Process for preparing a fermented dairy product, comprising the following steps:
a) hydrolysis of lactose contained in milk;
b) proteins and sugars concentrations through a process of filtration of the resulting composition under high pressure, wherein said process of filtration under high pressure is nanofiltration or reverse osmosis;
wherein a step of fermentation of milk is performed during step a) or after step a) or after step b) and wherein step b) occurs after step a);
wherein the nanofiltration is performed at a pressure comprised between 25 bars and 35 bars and the reverse osmosis is performed at a pressure comprised between 15 to 34 bars.

2. The process according to claim 1, wherein said fermented dairy product is a cream cheese or a yoghurt.

3. The process according to claim 1 or 2, wherein step b) is a step b') of nano filtration.

4. The process according to claim 3, wherein said step b') is performed at a pressure comprised between 30 bars and 35 bars, preferably at a pressure of 30 bars.

5. The process according to claim 1 or 2, wherein step b) is a step b") of reverse osmosis.

6. The process according to claim 5, wherein step b") is performed at a pressure comprised between 18 to 30 bars preferably between 24 bars and 30 bars, more preferably 30 bars.

7. The process according to any one of claim 1 to 6, wherein said milk is selected in the group consisting of whole milk, partially or totally skimmed milk, and skimmed milk powder.

8. A fermented dairy product obtainable according to the process according to any one of claims 1 to 7.

9. A fermented dairy product according to claim 8 comprising less than 0.5% of any added sugars or artificial sweeteners.

## Patentansprüche

1. Verfahren zur Herstellung eines fermentierten Milchproduktes, umfassend die folgenden Schritte:
a) Hydrolyse von Lactose, die in Milch enthalten ist;
b) Konzentrierung von Proteinen und Zuckern mittels eines Filtrationsverfahrens der resultierenden Zusammensetzung unter hohem Druck, wobei das Filtrationsverfahren unter hohem Druck Nanofiltration oder Umkehrosmose ist;
wobei ein Fermentationsschritt von Milch während Schritt a) oder nach Schritt a) oder nach Schritt b) durchgeführt wird und wobei Schritt b) nach Schritt a) erfolgt;
wobei die Nanofiltration bei einem Druck bestehend aus zwischen 25 bar und 35 bar durchgeführt wird und die Umkehrosmose bei einem Druck bestehend aus zwischen 15 bis 34 bar durchgeführt wird.

2. Verfahren nach Anspruch 1, wobei das fermentierte Milchprodukt ein Frischkäse oder ein Joghurt ist.

3. Verfahren nach Anspruch 1 oder 2, wobei Schritt b) ein Schritt b') der Nanofiltration ist.

4. Verfahren nach Anspruch 3, wobei der Schritt b') bei einem Druck bestehend aus zwischen 30 bar und 35 bar durchgeführt wird, bevorzugt bei einem Druck von 30 bar.

5. Verfahren nach Anspruch 1 oder 2, wobei Schritt b) ein Schritt b") der Umkehrosmose ist.

6. Verfahren nach Anspruch 5, wobei Schritt b") bei einem Druck bestehend aus zwischen 18 bis 30 bar durchgeführt wird, bevorzugt zwischen 24 bar und 30 bar, stärker bevorzugt 30 bar.

7. Verfahren nach einem der Ansprüche 1 bis 6, wobei die Milch ausgewählt ist aus der Gruppe bestehend aus Vollmilch, teilweise oder vollständig entrahmter Milch und Magermilchpulver.

8. Fermentiertes Milchprodukt, das gemäß des Verfahrens nach einem der Ansprüche 1 bis 7 erhältlich ist.

9. Fermentiertes Milchprodukt nach Anspruch 8 umfassend weniger als 0,5% irgendeines zugefügten Zuckers oder künstlichen Süßstoffs.

## Revendications

1. Procédé de préparation d'un produit laitier fermenté, comprenant les étapes suivantes :
a) l'hydrolyse du lactose contenu dans le lait ;
b) la concentration des protéines et des sucres par un procédé de filtration de la composition résultante sous pression élevée , ledit procédé de filtration sous pression élevée étant la nanofiltration ou l'osmose inverse;
une étape de fermentation du lait étant réalisée pendant l'étape a) ou après l'étape a) ou après l'étape b) et l'étape b) se produisant après l'étape a) ;
la nanofiltration étant réalisée à une pression comprise entre 25 bars et 35 bars et l'osmose inverse étant réalisée à une pression comprise entre 15 à 34 bars.

2. Procédé selon la revendication 1, dans lequel ledit produit laitier fermenté est un fromage frais ou un yaourt.

3. Procédé selon la revendication 1 ou 2, dans lequel l'étape b) est une étape b') de nanofiltration.

4. Procédé selon la revendication 3, dans lequel ladite étape b') est réalisée à une pression comprise entre 30 bars et 35 bars, de manière préférée à une pression 30 bars.

5. Procédé selon la revendication 1 ou 2, dans lequel l'étape b) est une étape b") d'osmose inverse.

6. Procédé selon la revendication 5, dans lequel l'étape b") est réalisée à une pression comprise entre 18 et 30 bars, de manière préférée entre 24 bars et 30 bars, de manière davantage préférée 30 bars.

7. Procédé selon l'une quelconque des revendications 1 à 6, dans lequel ledit lait est choisi dans le groupe constitué par le lait entier, le lait partiellement ou totalement écrémé, et le lait écrémé en poudre.

8. Produit laitier fermenté pouvant être obtenu par le procédé selon l'une quelconque des revendications 1 à 7.

9. Produit laitier fermenté selon la revendication 8, comprenant moins de 0,5 % de tout sucre ou édulcorant artificiel ajouté.
